# DEMANDE DE BREVET EUROPEEN

(11) **EP 0 741 446 A1**
(43) Date de publication de la demande: **06.11.1996**
(21) Numéro de dépôt: 96400939.3
(22) Date de dépôt: 02.05.1996
(51) Int. Cl.: H02M 1/12

(54) **Dispositif d'alimentation à découpage**

(30) Priorité: 05.05.1995 FR 9505429
(71) Demandeur: SGS-THOMSON MICROELECTRONICS S.A., F-94250 Gentilly (FR)
(72) Inventeur: Bailly,Alain c/o Cabinet BALLOT-SCHMIT, 94230 Cachan (FR); Wuidart,Luc c/o Cabinet BALLOT-SCHMIT, 94230 Cachan (FR)
(74) Mandataire: Schmit, Christian Norbert Marie

(57) **Abrégé**

Dans un dispositif à convertisseur à demi-pont asymétrique, une amélioration sensible du facteur de puissance est obtenue en plaçant une inductance de manière judicieuse dans le circuit de découpage.

## Description

L'invention concerne un dispositif d'alimentation à découpage. Elle s'applique aux dispositifs d'alimentation en tension stabilisée à partir d'un réseau alternatif et utilisant des redresseurs non commandés, comme notamment dans les domaines de l'éclairage ou de la télévision.

Il est habituel dans les dispositifs d'alimentation utilisant un redresseur non commandé, d'utiliser un convertisseur de tension continu-continu derrière un condensateur de filtrage d'entrée, pour fournir une tension stabilisée en sortie à partir de la tension d'entrée fournie par le redresseur aux bornes du condensateur de filtrage. Ces convertisseurs sont des circuits d'alimentation à découpage qui utilisent un circuit de commande d'au moins un interrupteur électronique de puissance, pour contrôler un convertisseur direct, à accumulation ou encore asymétrique, de manière à asservir le niveau de la tension de sortie à un niveau de référence. On obtient ainsi une tension de sortie stabilisée, nivelée. Mais on est aussi intéressé à avoir une bonne valeur du facteur de puissance du dispositif.

On rappelle que le facteur de puissance est le rapport de la puissance réelle à la puissance totale apparente. Pour un réseau alternatif à courant sinusoïdal, le facteur de puissance est le cosinus de l'angle de déphasage courant-tension. Mais un redresseur tire un courant non sinusoïdal d'un système alternatif et les composantes harmoniques du courant contribuent à rendre le facteur de puissance inférieur au cosinus de l'angle de déphasage.

Ainsi, même si le courant tiré par le redresseur est en phase avec la tension (ce qui est le cas avec un redresseur à diodes), si le courant contient des composantes harmoniques, le facteur de puissance est toujours inférieur à l'unité. En pratique, cela entraîne que le réseau alternatif est rendu moins efficace, car il fournit de la puissance aux fréquences harmoniques différentes de la fréquence de ligne. Cela entraîne aussi que la valeur nominale du courant que l'on peut tirer est réduite. Dans l'invention, on s'intéresse plus particulièrement aux dispositifs d'alimentation à découpage à redresseur non commandé. Améliorer le facteur de puissance dans un tel dispositif, c'est alors réduire le niveau des composantes harmoniques du courant tiré par le redresseur non commandé.

Des dispositifs ont alors été étudiés pour élever la tension aux bornes du condensateur de filtrage. Ces dispositifs comprennent une inductance dont le transfert d'énergie est commandé par un interrupteur électronique de puissance dont la commande d'ouverture ou de fermeture est fournie par un circuit de contrôle complexe, comprenant notamment une mesure de courant. Ces dispositifs permettent d'obtenir une tension régulée en sortie très élevée et une forme d'onde du courant d'entrée identique à celle de la tension d'entrée : on obtient un facteur de puissance très proche de l'unité.

Mais ces dispositifs sont particulièrement couteux, ce qui empêche notamment leur utilisation dans certains domaines particulièrement concurrentiels, comme celui de la télévision.

Un objet de l'invention est de résoudre ce problème technique d'amélioration de la forme d'onde du courant tiré par le redresseur d'une manière plus simple et moins coûteuse.

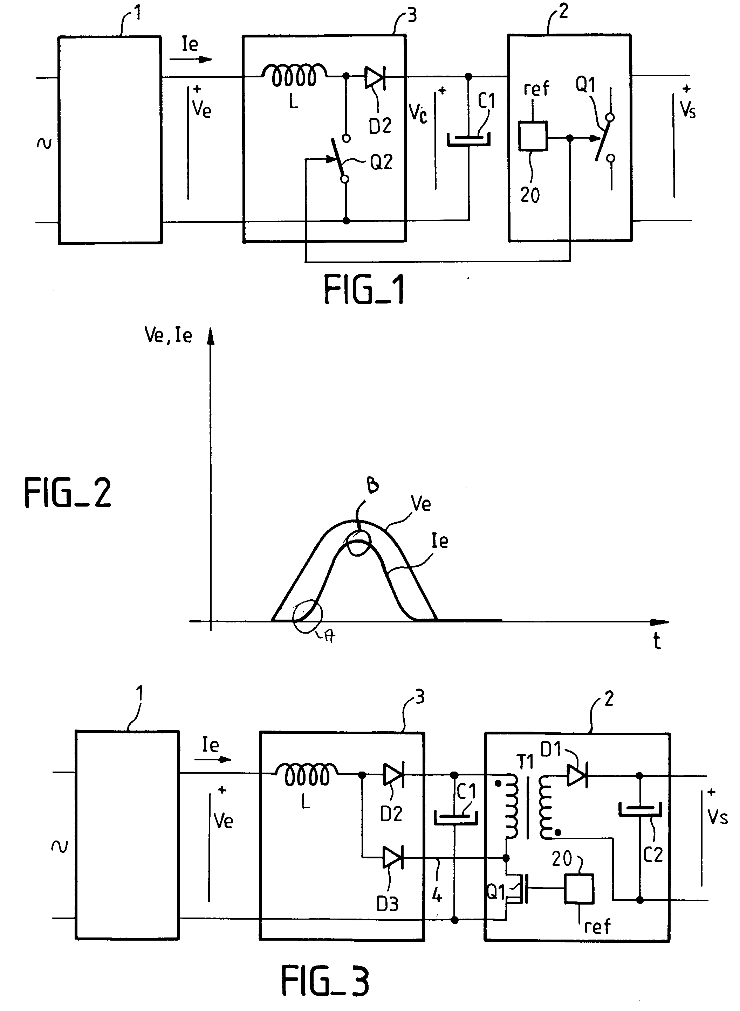

On connaît de l'état de la technique (EP A 0 503 715) un dispositif d'alimentation qui utilise le circuit de commande du circuit de découpage pour commander l'ouverture et la fermeture d'un interrupteur électronique de puissance contrôlant le transfert de l'énergie de l'inductance dans le condensateur. Cette commande commune du circuit de découpage et du dispositif d'élévation de tension conduit à une forme d'onde du courant d'entrée relativement proportionnelle à celle de la tension d'entrée. Avec une tension sinusoïdale, on obtient un bon facteur de puissance, proche de l'unité. La figure 1 représente un schéma de principe d'un tel dispositif. Il comprend un redresseur non commandé 1, un condensateur de filtrage C1 et un circuit 2 de découpage de la tension disponible aux bornes du condensateur.

Le redresseur non commandé 1 est un circuit à diodes, qui délivre une tension d'entrée Ve et tire un courant d'entrée Ie à partir d'un réseau alternatif. La tension Ve est appliquée au condensateur C1. Quand cette tension est basse, le condensateur sert de réservoir d'énergie pour le circuit 2 de découpage d'alimentation.

Le circuit 2 de découpage est un convertisseur continu-continu qui comprend un interrupteur électronique Q1 de puissance, commandé par un circuit de commande 20, pour asservir la tension de sortie Vs à un niveau de référence ref. Le circuit 2 de découpage peut être avec transformateur, et du type convertisseur direct, à accumulation.

Le dispositif d'alimentation comprend en outre, entre le redresseur non commandé et le condensateur, un dispositif 3 d'élévation de tension. Ce dispositif d'élévation de tension comprend une inductance L traversée par le courant d'entrée Ie, et un interrupteur électronique de puissance Q2 pour commander le transfert d'énergie de l'inductance vers le condensateur C1. Une diode D2 de protection est placée entre l'inductance et le condensateur C1. L'interrupteur Q2 est commandé par le circuit de commande 20.

Ainsi, l'interrupteur Q1 pour la régulation de la tension de sortie et l'interrupteur Q2 pour la régulation du courant d'entrée, fonctionnent avec le même rapport cyclique. Ce rapport cyclique peut être considéré comme constant pour un condensateur C1 suffisamment gros (c'est-à-dire pour un faible taux d'ondulation de la tension Vc aux bornes du condensateur).

De cette manière, on obtient un courant Ie relativement proportionnel à la tension Ve, comme représenté sur la figure 2, pour une demi-alternance de tension. L'analyse harmonique d'un tel courant montre que les valeurs efficaces des composantes harmoniques sont très diminuées. Le facteur de puissance est donc très amélioré, proche de l'unité.

L'inductance L est dimensionnée pour obtenir sa démagnétisation complète pour chaque nouvelle période (mode discontinu). En effet, si la démagnétisation n'est pas complète (mode continu) le courant résiduel entraîne une forme d'onde résultante peu favorable avec des pics de courant aux valeurs élevées de tension, ce que l'on veut éviter.

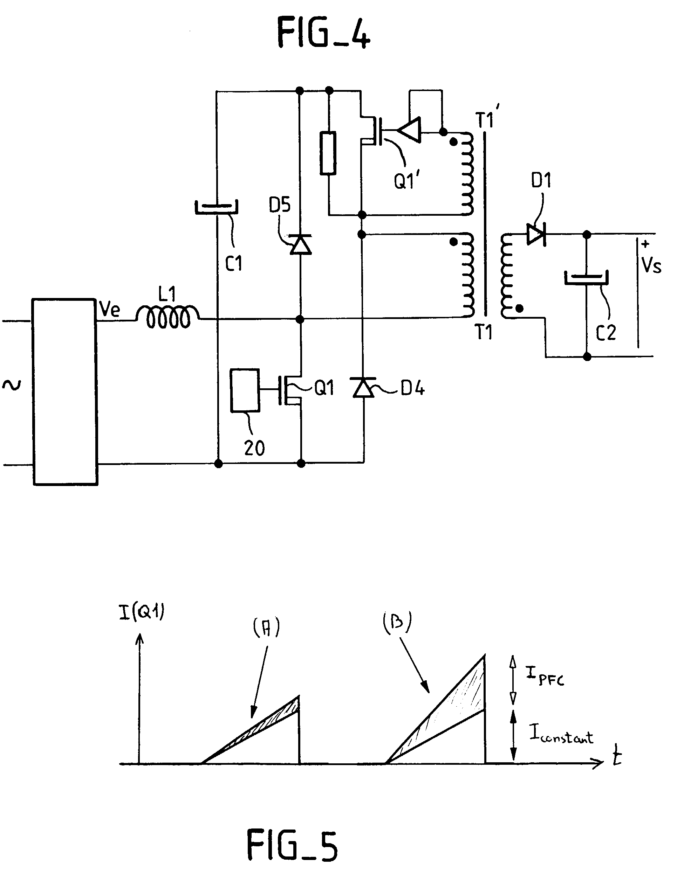

Une application pratique connue de ce principe est représentée à la figure 3, pour un circuit de découpage mono-interrupteur du type à accumulation avec transformateur T1 (flyback).

L'enroulement primaire du transformateur T1 a une première prise de connexion reliée à la borne positive du condensateur C1 et une deuxième prise de connexion reliée à une borne de l'interrupteur Q1.

L'enroulement secondaire du transformateur T1 a une première prise de connexion reliée à l'anode d'une diode D1, et un condensateur de sortie C2 est connecté entre la cathode de la diode et une deuxième prise de connexion de l'enroulement secondaire. On retrouve la tension de sortie Vs aux bornes du condensateur C2.

Le circuit de commande 20 est du type connu à modulation d'impulsions, qui comprend un comparateur du niveau de la tension Vs aux bornes du condensateur de sortie C2 à un niveau de référence ref.

Le dispositif 3 d'élévation de tension comprend une inductance L suivie d'une diode D2 en série, entre la ligne de tension Ve et une borne du condensateur C1 de filtrage d'entrée. Et l'interrupteur Q1 du circuit 2 de découpage est utilisé pour commander le transfert d'énergie magnétique de l'inductance L du dispositif d'élévation de tension. Cette structure est avantageuse en terme de composants, puisqu'elle supprime l'interrupteur Q2 de la figure 1.

Mais il faut pour cela prévoir une connexion 4 entre l'interrupteur Q1 et l'inductance L. Et pour bloquer la haute tension du primaire, qui est supérieure à la tension du condensateur, il est nécessaire de prévoir une diode D3 sur cette connexion 4, comme représenté sur la figure 3.

En pratique, l'interrupteur Q1 doit pouvoir bloquer la tension réfléchie et passer deux fois le courant normal quand il est fermé. Ceci est obtenu en utilisant un interrupteur haute tension et faible impédance.

Dans un tel dispositif à convertisseur mono-interrupteur, il est nécessaire de prévoir des réseaux d'aide à la commutation, pour gérer la surtension sur l'interrupteur Q1 à l'ouverture de celui-ci. Cette surtension est due au courant interrompu quand l'interrupteur passe à l'état ouvert, et qui circule dans l'inductance de fuite primaire-secondaire du transformateur. Et il faut utiliser un interrupteur suffisamment dimensionné pour tenir cette surtension, soit en pratique un peu plus de deux fois la tension crête d'entrée. Un tel composant coûte cher et l'utilisation de réseaux d'aide à la commutation contribue à dégrader le rendement.

Dans l'invention, on s'intéresse plutôt à un dispositif d'alimentation utilisant un circuit de découpage en demi-pont asymétrique, c'est à dire avec un transformateur et deux interrupteurs électroniques de puissance. Ces dispositifs sont habituellement utilisés pour des puissances de sortie élevées (supérieures à 100 watts). Le premier interrupteur dit interrupteur du bas est commandé directement par un circuit de commande et le deuxième interrupteur électronique de puissance, dit interrupteur du haut est commandé à travers le transformateur. Avec un tel circuit, on n'a plus besoin de réseaux d'aide à la commutation et les interrupteurs sont plus petits, donc moins chers, puisqu'ils n'ont plus qu'à tenir la tension crête de ligne. On a donc en pratique un dispositif d'alimentation moins cher, et qui a un meilleur rendement. Ces avantages sont bien connus.

Dans l'invention, on cherche à améliorer à moindre coût, le facteur de puissance d'un dispositif d'alimentation avec un circuit de découpage à deux interrupteurs. Alors que les dispositifs précédemment décrits (Figures 1 et 3) nécessitent une inductance et des diodes supplémentaires, dans l'invention, on a découvert qu'en ajoutant seulement une inductance, placée judicieusement dans le circuit de découpage en demi-pont asymétrique, on obtenait un circuit d'élévation de tension avec l'interrupteur dit du bas et la diode associée du circuit de découpage. Avec une telle structure imbriquée, au prix d'une seule inductance additionnelle, on obtient un bon facteur de puissance.

D'autres caractéristiques et avantages de l'invention sont détaillés dans la description suivante, à titre d'exemple non limitatif, et en référence aux dessins annexés dans lesquels :
- la figure 1 déjà décrite représente un schéma de principe d'un dispositif d'alimentation avec un circuit de découpage du type mono-interrupteur;
- la figure 2 déjà décrite représente les formes d'onde du courant et de la tension d'entrée obtenues;
- la figure 3 déjà décrite est un schéma d'un convertisseur mono-interrupteur à facteur de puissance élevé selon le principe de la figure 1;
- la figure 4 est un schéma détaillé d'un dispositif d'alimentation à convertisseur à double interrupteur selon l'invention; et
- la figure 5 montre la contribution au courant dans l'interrupteur contribuant à la fois au circuit de découpage et au circuit d'élévation selon l'invention.

Un dispositif d'alimentation selon l'invention est représenté sur la figure 4. Le circuit de découpage en demi-pont asymétrique comprend un transformateur à double interrupteur. En plus des éléments déjà décrits en relation avec la figure 3, un prolongement Tl' de l'enroulement primaire pour commander un deuxième interrupteur électronique de puissance Q1' à travers le transformateur. Cet interrupteur Q1' (interrupteur du haut) est connecté, en série avec une diode de protection D4, aux bornes du condensateur. Le point milieu entre l'interrupteur Q1' et la diode D4 est connecté à une première prise de connexion de l'enroulement primaire principal. L'interrupteur Q1 (interrupteur du bas) est connecté, en série avec une diode de protection D5, aux bornes du condensateur C1. Le point milieu entre l'interrupteur Q1 et la diode D5 est connecté à une deuxième prise de connexion de l'enroulement primaire principal. Dans un tel montage, les deux interrupteurs sont à commandes synchrones. Dans une structure classique, le condensateur de filtrage C1 a une borne connectée à la ligne de masse du redresseur et l'autre borne B1 connectée à la tension de ligne Ve.

Pour obtenir un dispositif d'élévation de tension selon le principe de l'invention, on déconnecte la borne B1 du condensateur de la tension de ligne Ve et on connecte avantageusement une inductance L1 entre la ligne de tension d'entrée Ve et le point milieu entre la diode D5 et l'interrupteur Q1. L'inductance L1, la diode D5 et l'interrupteur Q1 forment alors le dispositif d'élévation de tension 3 selon le principe de l'invention. Ce dispositif est imbriqué dans le circuit de découpage avec seulement l'ajout d'une inductance connectée au point milieu entre l'interrupteur du bas Q1 et la diode D5 associée. La figure 5 montre alors la contribution au courant de l'interrupteur du bas Q1. La partie grisée montre la composante de courant I_{PFC} due au circuit d'élévation formé des éléments L1, Q1 et D5. L'autre composante I_{constant}, constante, est celle que voit également l'autre interrupteur Q1', et correspond à la contribution de l'interrupteur dans son rôle habituel dans le circuit de découpage.

La courbe A montre plus particulièrement la forme du courant correspondant à la zone référencée A sur la figure 2. La courbe B montre plus particulièrement la forme du courant correspondant à la zone référencée B sur la figure 2.

Le principe de l'invention permet d'obtenir une forme d'onde de courant proche de celle de la source de tension et en particulier, si la source de tension est sinusoïdale, le dispositif a alors un facteur de puissance proche de l'unité. Cette amélioration est obtenue au prix d'une seule inductance. On a donc une structure particulièrement avantageuse, par rapport aux dispositifs connus comme décrits en relation avec les figures 1 et 3, qui nécessitent des diodes supplémentaires (D2, D3) pour réaliser le dispositif d'élévation.

Les interrupteurs électroniques de puissance représentés sur les différentes figures sont des transistors MOS de puissance. On peut aussi avoir des transistors bipolaires.

Le principe de l'invention peut être utilisé pour définir de nouvelles structures simplifiées ayant la caractéristique d'avoir un bon facteur de puissance lorsqu'elles sont alimentées en tension sinusoïdale.

## Revendications

1. Dispositif d'alimentation à partir d'une tension d'entrée (Ve) délivrée par un redresseur non commandé (1), comprenant un circuit de découpage d'alimentation (2) en demi-pont asymétrique connecté en entrée aux bornes d'un condensateur de filtrage (C1), le circuit de découpage comprenant un transformateur, un premier interrupteur électronique de puissance (Q1) commandé par un circuit (20) de commande et connecté, en série avec une première diode (D5), aux bornes du condensateur de filtrage (C1), et un deuxième interrupteur électronique de puissance (Q1') commandé à travers le transformateur et connecté, en série avec une deuxième diode (D4), aux bornes du condensateur de filtrage (C1), caractérisé en ce qu'une inductance (L1) est connectée entre la ligne de tension d'entrée (Ve) et le point milieu entre la première diode (D5) et le premier interrupteur (Q1).

2. Dispositif d'alimentation selon la revendication 1, caractérisé en ce que les interrupteurs électroniques de puissance sont des transistors MOS ou bipolaires.
